# EUROPÄISCHE PATENTSCHRIFT

(11) **EP 1 186 079 B1**
(45) Veröffentlichungstag und Bekanntmachung des Hinweises auf die Patenterteilung: **02.02.2005**
(21) Anmeldenummer: 00934998.6
(22) Anmeldetag: 10.05.2000
(51) Int. Cl.: H01S 4/00

(54) **MINIATURISIERTE TERAHERTZ-STRAHLUNGSQUELLE**
MINIATURIZED TERAHERTZ RADIATION SOURCE
SOURCE MINIATURISEE DE RAYONNEMENT DE L'ORDRE DU TERAHERTZ

(30) Priorität: 25.05.1999 DE 19923614; 12.02.2000 DE 10006361
(43) Veröffentlichungstag der Anmeldung: 13.03.2002
(73) Patentinhaber: NaWoTec GmbH, 64380 Rossdorf (DE)
(72) Erfinder: KOOPS, Hans, W., P., 64372 Ober-Ramstadt (DE); BAUER, Tobias, 60439 Frankfurt/M. (DE); ELSÄSSER, Wolfgang, 64342 Seeheim-Jugenheim (DE); FLOREANI, Filip, 64293 Darmstadt (DE); ROSKOS, Hartmut, 60323 Frankfurt/M. (DE)
(74) Vertreter: Borchert, Uwe Rudolf, Dipl.-Ing.
(86) Internationale Anmeldenummer: PCT/EP2000/004167
(87) Internationale Veröffentlichungsnummer: WO 2000/072413

(56) Entgegenhaltungen:
- WO-A-87/01873
- WO-A-98/21788
- SCHOESSLER C ET AL: "Nanostructured integrated electron source" SILICON HETEROSTRUCTURES: FROM PHYSICS TO DEVICES, BARGA, ITALY, 16-19 SEPT. 1997, Bd. 16, Nr. 2, Seiten 862-865, XP000961592 Journal of Vacuum Science & Technology B (Microelectronics and Nanometer Structures), March-April 1998, AIP for American Vacuum Soc, USA ISSN: 0734-211X

## Beschreibung

Die Erfindung betrifft eine miniaturisierte Terahertz-Strahlungsquelle gemäß der im Oberbegriff des Patentanspruches 1 angegebenen Art.

Es ist grundsätzlich bekannt, daß kohärente Strahlung bei bestimmten Frequenzen im fernen Infrarotbereich zum Beispiel. durch Moleküllaser, die mit CO₂-Lasern gepumpt werden, erzeugt werden kann. Im Wellenlängenbereich von 3 mm bis 30 µm (von 100 Gigahertz bis 10 Terahertz) liegen viele der für die Spektroskopie von Molekülen und Festkörpern interessierenden Frequenzen und Wellenlängen. Der Einsatz einer auf einem Halbleiterchip eines Wafers realisierten und im Wellenlängenbereich durchstimmbaren Mikrostrahlungsquelle für diesen Bereich der Terahertz-Strahlung mit ausreichender. Ausgangsleistung im Bereich zwischen 1 µW und 1 W ist von hoher technischer Bedeutung für spektroskopische Anwendungen in allen Fragen des Umweltschutzes, der Analytik und Materialcharakterisierung in Medizin und Biologie sowie der Chemie und Physik. Eine weitere Möglichkeit kohärente Strahlung im fernen Infrarotbereich zu generieren beruht auf dem sogenannten Smith-Purcell-Effekt. Die Strahlung wird hierbei in ähnlicher Weise generiert wie es beim "freien Elektronenlaser" bekannt ist. Hier wird mit Hilfe von makroskopischen Elektronenquellen und Beugungsgittern mit 100 bis 300 µm Periode ein kohärentes Strahlungsfeld mit polarisierter Strahlung mit bis zu 1 µW Leistung erzeugt.

Unter dem Titel "Intensity of Smith-Purcell radiation in the relativistic regime" von J. Walsh, K. Woods, S. Yeager, Department of Physics and Astronomy, Dartmouth College, Hanover, NH 03755, USA, pages 277-279, ist die Theorie derartiger Smith-Purcell-Stratzlungsquellen angegeben und diskutiert und außerdem sind in diesem Artikel experimentelle Ergebnisse angegeben. Weiterhin ist in dem Artikel im LEOS NEWSLETTER, February, 1999 von J.E. Walsh, J.H. Brownell, J.C. Swartz, Department of Physics and Astronomy, Dartmouth College, Hanover, New Hampshire 03755-3528 und M.F. Kimmitt, Department of Physics, Essex University, Colchester, UK, January 7, 1999, pages 11-14, grundsätzlich der Aufbau und die Wirkungsweise einer Strahlungsquelle im Terahertz-Gebiet unter dem Titel "A New Source of THz-FIR Radiation" beschrieben. Diese bekannten Terahertz-Strahlungsquellen sind zwar durchaus leistungsfähig, reichen jedoch für viele analytische Anwendungen noch nicht aus und sind noch nicht genügend miniaturisiert.

Ein weiter miniaturisierter freier Elektronenlaser für analytische Anwendungen in Form einer leistungsfähigeren Quelle ist deshalb wünschenswert.

Der Erfindung liegt deshalb die Aufgabe zugrunde, eine miniaturisierte Terahertz-Strahlungsquelle gemäß der im Oberbegriff des Patentanspruches 1 genannten Art auf einem Halbleiterchip mit Hilfe der bekannten additiven Nanolithographie zu schaffen, die als miniaturisierter freier Elektronenlaser arbeitet, wesentlich leistungsfähiger ist als die bisherigen entsprechenden Strahlungsquellen und einen wesentlich größeren Anwendungsbereich, insbesondere für analytische Anwendungen ermöglicht.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

Durch die Anwendung der additiven Nanolithographie für die Herstellung von derartigen miniaturisierten Terahertz-Strahlungsquellen wird die Realisierung von Feldelektronenquellen hohen Richtstrahlwertes erreicht. Durch zusätzliche miniaturisierte elektronenoptische Elemente wie Beschleunigungsgitter, Fokussierungslinsen, Strahlablenker und freistehende metallische Stäbe kann nun in Zusammenfügung der Komponenten ein miniaturisierter freier Elektronenlaser auf einer Fläche von wenigen 100 µm² bis 10 mm² aufgebaut werden. Die Elektronenquelle hat dabei die Charakteristik, bei 30 Volt Elektronen zu emittieren, die dann eine Energie von 30 Elektronenvolt besitzen. Durch die Anwendung der Nanolithograhpie ist es möglich, die zweite charakteristische Komponente der Fokussierung und Strahlführung des Elektronenstrahles parallel zur Oberfläche in einem endlichen Abstand von der dritten Komponente, einem metallischen Gitter, zu führen. Die Höhenlage des Strahls über dem metallischen Gitter kann ebenfalls durch Ablenkspannungen eingestellt werden, die an mikrominiaturisierte Ablenkplatten bzw. Drahtlinsen angelegt werden. Das Beugungsgitter, möglichst bis zu einem Millimeter lang, ein Metallgitter mit einer Gitterkonstante im Bereich von 0,1 mm bis 0,1 µm, kann durch konventionelle Lithographie bei der Herstellung der elektrischen Anschlußstrukturen zur Versorgung der Feldelektronenquelle erzeugt werden bzw. durch Elektronenstrahllithographie mit höchster Auflösung definiert werden.

Mit Vorteil wird eine hochauflösende Doppellacktechnik und Lift-Off angewandt. Bei der vorliegenden Lösung wird durch den Einsatz der neuartigen Technologien die Integration der Elektronenquelle, die Strahlführung und die Erzeugung der Ferninfrarotstrahlung durch den Flug der schnellen Elektronen über die Beugungsgitter hinweg erzielt. Dabei werden bei standardmäßigen Quellen bis ca. 20.000 Volt Beschleunigungsspannung und einem Elektronenstrahl von 20 µm Durchmesser über einem Gitter von 100 bis 300 µm Periode, eine Infrarotstrahlung im fernen Infrarot zwischen 100 µm und einem Millimeter Wellenlänge erzielt. Diese Strahlung entsteht durch die beim Vorbeiflug der Elektronen schwingende Bildladung, die wegen dem Oberflächenprofil des Gitters schwingt. Durch den wechselnden Abstand der Ladungen entsteht ein schwingender Dipol, der längs des Gitters in kohärenter Weise schwingt. Dies erfolgt durch die Coulomb-Wechselwirkung der einzelnen Ladungen auf den Drähten. Dabei schwingt entsprechend der einzelnen Ladungen der Stäbe das gesamte elektrische Feld kohärent. Auf diese Weise wird längs des ganzen Gitters kohärent elektromagnetische Strahlung abgestrahlt. Ihr Energietransfer erfolgt nahezu verlustlos aus dem Elektronenstrahl in die elektromagnetische Strahlung. Die Polarisation erfordert einen gewissen Verschiebestrom und damit eine gewisse Leistung, aber diese wird voll direkt dem Strahl entzogen und auf diese Weise wird die schwingende Dipol-Ladungskette erzeugt. Neuartig ist auch die auf einem Chip integrierte Führung der Elektronen und die direkte Kopplung an das Gitter mit hoher örtlicher Auflösung im Herstellungsprozeß, ebenso die durch die Mikrominiaturisierung möglich werdende Verwendung von niederenergetischen Elektronen mit Energien zwischen 10 und 1000 eV. Es ist auch möglich, bis zu 10 kV Elektronen auf dem Chip zu erzeugen und die Führung durch miniaturisierte elektronenoptische Bauelemente wie Mikrolinsen und Ablenkelemente zu realisieren.

Bei der Verwendung derart energiereicher Elektronen ist auch die Erzeugung von Strahlung bei kurzen Wellenlängen vom mittleren infraroten bis hin zum sichtbaren Spektralbereich möglich. Durch Fertigung auf dem gemeinsamen Substrat ist die direkte Ankopplung an das Gitter auf kürzester Strecke zur Quelle und die Herstellung des Gitters und der Quelle auf demselben Chip gewährleistet. Dadurch wird der Strahlengang der Elektrodenanordnung, der im herkömmlichen Ausführungsfall bis zu einem Meter beträgt, auf unter 1 mm bis 10 mm Länge reduziert. Außerdem wird eine sehr hochkohärente und lokale Lichtquelle erzeugt, was der zeitlichen und der räumlichen Kohärenz der Strahung zugute kommt. Durch die stärkere Verkürzung des gesamten Elektronenweges ist es nicht mehr erforderlich, Höchstvakuum oder Hochvakuum im Strahlraum anzuwenden. Es ist ausreichend, in einer Flipchip-Bond-Technik das System durch ein in Silizium geätztes Fenster abzudecken. Dieses Fenster ist durch eine durchgehende Membran aus Silizium geschlossen, wodurch ein Hohlraum ermöglicht wird. Das bis zu 10 µm hohe Bauelement ist in dem Hohlraum leicht unterzubringen. Typischerweise ätzt man in ein Siliziumwafer von 250 µm Dicke Fenster von einigen Millimetern Durchmesser, die durch eine Membran mit einer Dicke von 10 µm bis 100 µm abgeschlossen sind. Auf diese Weise ist eine stabile mechanische Kapselung des miniaturisierten Bauelements möglich. Es kann aber auch in mikromechanischer Weise mit Millimeter-Dimensionen gefertigt werden. Das erforderliche Vakuum beträgt dabei ca.1 x 10⁻⁵ bar (0,01 Torr) In diesem Fall ist dann die mittlere freie Weglänge der Elektronen in diesem Gas verminderten Drucks so groß wie die Strahllänge des miniaturisierten Bauelements. Auf diese Weise ist keine Pumpenanordnung mehr erforderlich, was von großem Vorteil ist. Das Bauelement kann als gefertigtes abgeschlossenes Element abgepackt und angeschlossen werden. Es ist auf diese Weise möglich, auf einem Halbleiterchip eine Terahertz-Strahlungsquelle, das heißt eine Millimeter- und Submillimeter-Strahlungsquelle zu erzeugen, die durch entsprechende Wellenführung an weiterführende Anwendungen angeschlossen werden kann.

Weitere Vorteile, Merkmale und Anwendungsmöglichkeiten der miniaturisierten bzw. mikrominiaturisierten Terahertz-Strahlungsquelle, insbesondere deren Aufbau und Wirkungsweise, ergeben sich aus der nachfolgenden Beschreibung in Verbindung mit den in der Zeichnung dargestellten Ausführungsbeispielen.

Die Erfindung wird nun anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: eine Drauf- und eine Seitenansicht eines prinzipiellen Aufbaus einer miniaturisierten Terahertz-Strahlungsquelle basierend auf dem Smith-Purcell-Effekt;
- Fig. 2: eine Kapselung mit einer Silizium-Membranenstruktur zur Aufrechterhaltung des erforderlichen Vakuums beim Betrieb und
- Fig. 3: eine Zweikammermembranabdeckung des miniaturisierten freien Elektronenlasers.

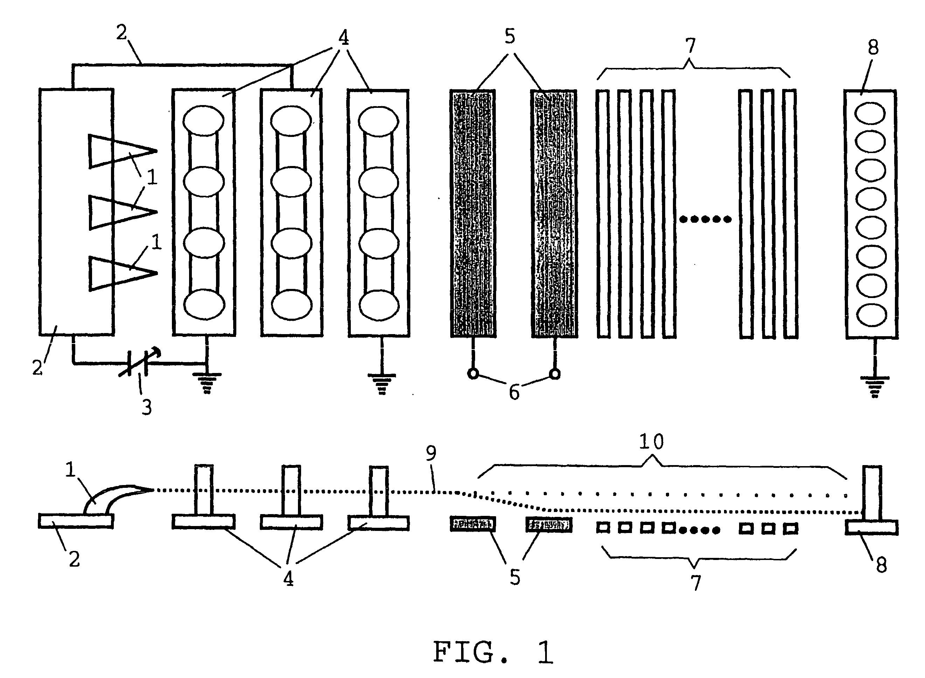

In Fig. 1 ist die schematische Darstellung des Elektrodenaufbaus für einen miniaturisierten freien Elektronenlaser in Draufsicht und Seitenansicht dargestellt. Die einzelnen dargestellten Elemente werden dabei auch in einem bekannten additiven Nanolithographie-Verfahren hergestellt. Sowohl in der Drauf- als in der Seitenansicht sind in folgender Reihenfolge die einzelnen Elemente der miniaturisierten Terahertz-Strahlungsquelle dargestellt. Zunächst sind links die Feldemitterspitzen 1 dargestellt, die über elektrische Anschlüsse oder Verbindungen 2 mit einer regelbaren Spannungsquelle 3 und zum anderen mit einer elektrostatischen Linse 4, die hier aus drei Elekzroden besteht, verbunden. Die linke Elektrode ist dabei der Extraktor bzw. die erste Anode der Elektronenquelle. In der Mitte sind Strahlablenker 5 mit Anschlüssen 6 dargestellt, an denen optische und/oder Elektronenstrahl-Litographie und eine Ablenkspannung angelegt ist. Dem Strahlablenker 5 folgt ein Gitter 7 aus Metall durch das der Elektronenstrahl 9, der durch den Strahlenablenker 5 abgelenkt wurde, durch läuft und hier als Elektronenstrahl ohne Ablenkung 10 auf eine zweite Anode 8 auftrifft.

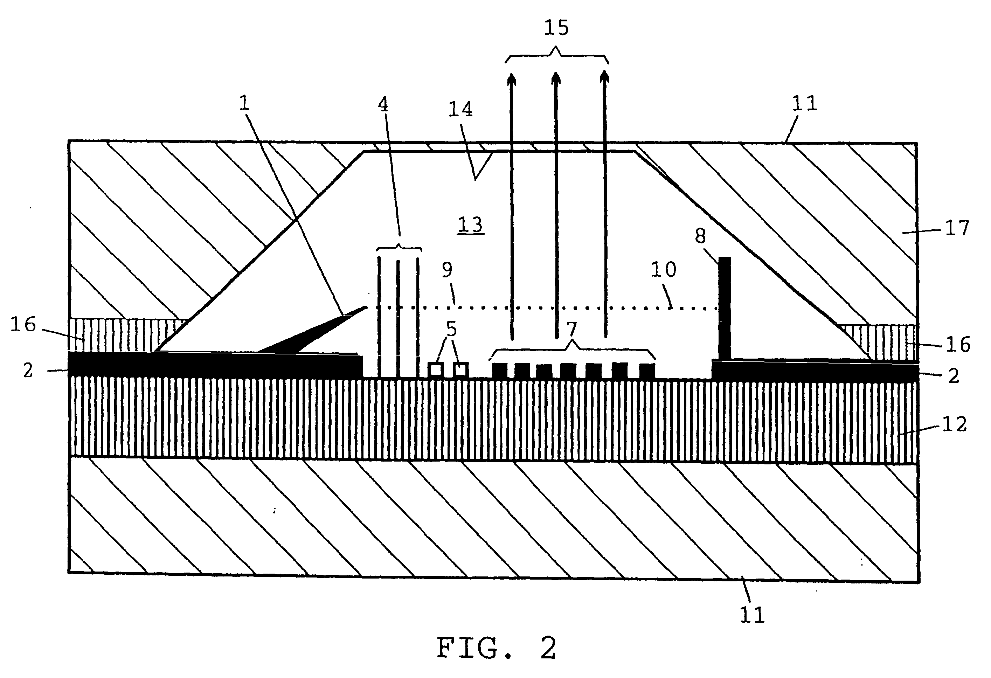

In Fig. 2 ist eine Variante einer Kapselung dargestellt. Durch diesen Aufbau wird erreicht, daß die Elektronenquelle, hier in Form der Feldemitterspitzen 1, die elektrostatische Linse 4 zur Fokussierung des Elektronenstrahls 9/10 und der Strahlablenker 5 zur Strahlenablenkung in horizontaler und vertikaler Richtung, die Gitter 7 aus Metall mit unterlegtem Reflektor in Mix-Match-Technik durch additive Nanolithographie auf durch Elektronenstrahl- oder optische Lithographie vorgefertigten Metall-Leiterbahn-Anschlußstrukturen mit integrierten Gitterstrukturen auf ein isolierendes Substrat mit Terahertz-Reflexionsunterlage im Gitterbereich integriert aufbaubar ist und in einer Technologie, die für Terahertz-Strahlung transparent ist, in einem Vakuum 13 dicht gekapselt ist. Durch diesen Aufbau ist es möglich, daß der aus dem Feldemitter 1 austretende Elektronenstrahl 9 durch miniaturisierte Drahtlinsen 4 fokussiert und durch integrierte Ablenkplatten 5 relativ zur Lage der Gitter 7 geführt und positioniert werden kann, wodurch Terahertz-Strahlung erzeugt wird, deren Intensität und Wellenlänge variiert und selektiert werden kann. Die Feldemitter bzw. Feldemitterspitzen 1 sind über einen elektrischen Anschluß 2 mit einer regelbaren Spannungsquelle 3 verbunden und außerdem mit einer elektrischen Verbindung 2 mit der mittleren Elektrode der elektrostatischen Linse 4. Die linke elektrische Elektrode der Linse 4 ist die erste Anode der Elektronenquelle und ist zusammen mit einem Anschluß der regelbaren Spannungsquelle 3 mit Masse verbunden, wie auch die auf der anderen Seite der mittleren Elektrode liegende Elektrode der elektrostatischen Linse 4. Die Feldelektronenquelle mit den Feldemittern 1 ist ein durch additive Nanolithographie aufgebauter Draht aus gut leitfähigem Material mit stabilisierendem Vorschaltwiderstand und so ausgeführt, daß der Elektronenstrahl 9 parallel zur Oberfläche austritt. Das bedeutet, daß der Draht durch eine rechnergesteuerte Depositions-Lithographie in einer geraden oder bogenförmigen Ausführung frei über die Oberfläche der Leiterbahnstruktur endend hergestellt ist. Die Feldelektronenquelle ist punktförmig ausgeführt und auf ihre Feldemitterspitzen 1 ist mit Hilfe additiver Nanolithographie eine Material mit niedriger Austrittsarbeit aufgebracht worden, so daß schon bei relativ niedrigen Spannungen Elektronen emittiert werden.

Eine Variante des Aufbaues besteht: darin, daß hinter der Feldelektronenquelle mit den Feldemittern 1 ein Beschleunigungsgitter als Strahlablenker 5 in Form einer freistehenden Elektrode aus zwei Zylinderstäben oder einem stehenden Drahtring angebracht ist. Das dient dazu, daß die Elektronen beschleunigt werden und in nachfolgende zusätzlich aufgeführte runde Multipol- und/oder Zylinderlinsen geführt werden, wodurch die Ausbreitung des Elektronenstrahls 9 über das nachfolgende Beugungsgitter 7 in homogenem Abstand zur Oberfläche zusätzlich gelenkt wird. Die Fokussierungs- und Strahlführungslinsen, die durch additive Nanolithographie auf der durch Elektronenstrahllithographie oder optische Lithographie hergestellten Metallanschlußstruktur realisiert werden, sind so aufgebaut, daß ein in dieser Technik hergestelltes und ca. 1 mm bis 1 cm langes Beugungsgitter mit Gitterperioden von 0,5 bis 10 µm, je nach Wellenlänge der auszusendenden Terahertz-Strahlung, folgt.

Eine Variante des Aufbaus besteht noch darin, daß mehrere elektrisch getrennte Beugungsgitter nebeneinander angeordnet werden und diese durch Selektion verschiedener Quellen aktiviert werden können, was zur Auswahl verschiedener emittierter Wellenlängen dient.

Die Strahlung der Elektronenquelle wird durch eine Regelschaltung, insbesondere eine regelbare Spannungsquelle 3, konstant gehalten und der das Gitter 7 überfliegende Elektronenstrahl 10 wird dann auf einer zweiten Anode 8, die als Sammelanodenelektrode dient, aufgenommen.

Zwischen der zweiten Erdelektrode der elektrostatischen Linse 4 und der zweiten Anode 8 ist ein Feld angelegt, mit dem die Elektronengeschwindigkeit längs des Gitters verändert werden kann, was zur Feineinstellung der Wellenlänge und auch zur Erzeugung eines Frequenzspektrums dient.

In Fig. 2 ist ein weiteres Ausführungsbeispiel des Aufbaus der miniaturisierten bzw. mikrominiaturisierten Terahertz-Strahlungquelle, basierend auf dem Smith-Purcell-Effekt, gezeigt. Durch Kapselung mit einer Silizium-Membranstruktur kann das erforderliche Vakuum 13 zum Betrieb des Lasers aufrechterhalten werden. Die emittierte Laser-THz-Strahlung 15 wird durch ein Membranfenster 14 nach außen abgestrahlt. Der auf einem Chip aus Silizium 11 aufgebaute Strahler aus Feldemissionsquelle, Optik, Gitter und Anode ist in diesem Ausführungsbeispiel durch das Membranfenster 14 abgedeckt, das wie das gesamte Abdeckchip 17 aus Silizium 11 besteht. Der so aufgebaute Strahler wird in einem Vakuumsystem vor dem Bonden auf einen Druck von 10⁻⁷ bar (10⁻⁴ Torr) evakuiert, der für 1 Millimeter mittlere freie Weglänge ausreicht. Der Hohlraum wird anschließend im Vakuum durch thermisches Bonden, ohne die Spannungszuführung kurzzuschließen, verschlossen. Die Membranfenster 14 im Abdeckchip 17 sind mit reflexionsmindernden Schichten behandelt, so daß für den Frequenzbereich der emittierenden Strahlung eine maximale Transmission durch das Fenster 14 erreicht wird.

Unter dem Gitterbereich ist ein THz-Strahlungsreflektor in Form einer Metallschicht oder Anordnung von Gitterstäben mit definiertem Abstand geeigneter Periode aus magnetischen oder unmagnetischen Materialien angeordnet, so daß die THz-Strahlung 15, die das Gitter 7 in Substratrichtung verläßt, mit höchstmöglichem Reflexionsgrad durch das Gitter zurückgesandt wird und so daß die Intensität der abgesandten Strahlung verstärkt wird. Durch eine Strahlführung über dem Gitter 7 mit definiertem Abstand ist es möglich, die Intensität der Strahlungsquelle zu variieren, das heißt daß durch den Einsatz des Ablenkelementes 5 vor dem Gitter die abgestrahlte Intensität bei Anlegen einer Wechselspannung an dieses Ablenkelement moduliert werden kann. Auf diese Weise kann die Strahlung für spektroskopische Zwecke für Lock-In-Meßtechniken schon gleich moduliert erzeugt werden. Die selbe Lock-In-Modulation ist auch durch die Modulation der Extraktionsspannung an der Feldemitterspitze 1 möglich.

Für bestimmte Anwendungen ist es vorteilhaft, die Strahlungsquelle um einen auf einer darüberliegenden Fläche aufgebauten Monochromator in Form einer auf diesem Bereich wirksamen Nanometer- bzw. Mikrometerstruktur zu ergänzen, so daß Strahlen, die mit unterschiedlicher Wellenlänge erzeugt werden, die Strahlungsquelle in unterschiedliche Richtungen verlassen. Auf diese Weise kann durch Umschalten der Elektronenenergie, was im elektrostatischen System nach dem elektrostatischen Prinzip immer dieselbe Fokussierung und damit gleichbleibende Betriebsbedingungen ergibt, Strahlung unterschiedlicher Frequenz erzeugt werden und die Strahlungsquelle auf diese Weise für verschiedene Anwendungen elektrisch durchgestimmt werden.

Zwischen der Fokussierungslinse 4 und dem Ende des Gitters 7 wird in einer Variante ein elektrisches Feld angelegt, in dem am Ende des Gitters eine zusätzliche Elektrode angeordnet ist, die durch die angelegte Spannung die fliegenden Elektronen beschleunigen bzw. abbremsen kann. Auf diese Art und Weise ist es möglich, den Energieverlust der Elektronen, der beim Vorbeiflug am Gitter 7 auftritt, auszugleichen. Das Gitter 7, über das der Elektronenstrahl 10 fliegt, ist in Bereiche, die parallel zur Strahlrichtung liegen, unterteilt, in welchen unterschiedliche Gitterkonstanten realisiert sind. Durch horizontale, elektrostatische Strahlführung, bewirkt durch parallel zum Gitter 7 angeordnete Elektroden, bzw. durch Verwendung mehrerer Elektronenquellen, von denen je eine dem einzelnen Bereich zugeordnet ist, ist es jetzt möglich, auf diese Art und Weise die emittierende Strahlung in ihrer Wellenlänge umschaltbar zu realisieren.

Das Gitter variiert in seiner Gitterkonstante quer zur Strahlrichtung, so daß durch Ablenkfelder oder das Gitter insgesamt umschließende Ablenkplatten, die hinter der Fokussierungslinse angeordnete sind, die Strahlführung über dem Gitter so verändert werden kann, daß ein Bereich einer anderen Gitterkonstante zur Emission der Wellenlänge der Strahlung auswählbar wird. Wenn das Gitter als "chirped grating", das heißt Gitter mit variabler Gitterkonstante, ausgeführt ist, ist eine Einstellung der Wellenlänge in kontinuierlicher Weise möglich.

Die Intensitätssteuerung der Terahertz-Strahlungsquelle erfolgt dadurch, daß unter und über dem Gitter eine für THz-Strahlung transparente elektrostatische Platte angebracht ist, wodurch die Intensität örtlich selektiert werden kann. Dies wird mit Vorteil dadurch erreicht, daß diese elektrostatischen Platten mit unterschiedliche Potentiale besitzenden Bereichen ausgeführt sind, das heißt, daß Streifen aufgeführt sind, die getrennt eingestellt werden können.

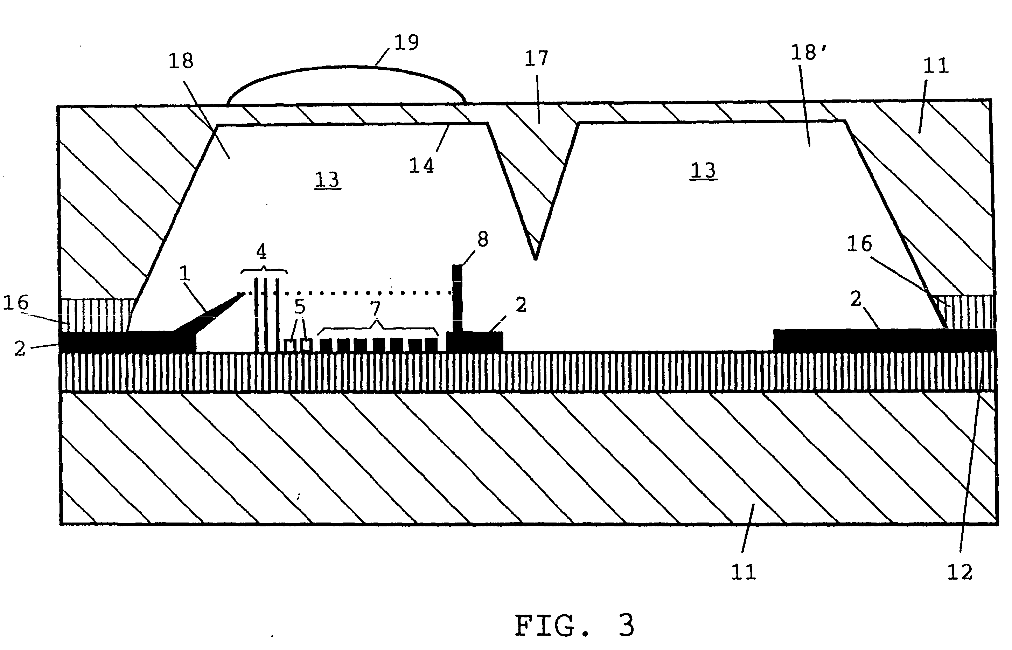

In Fig. 3 ist ein weiteres Ausführungsbeispiel gezeigt, das in dem Abdeckchip 17 mit zwei Membranfenstern 14 ausgestattet ist. Wie in Fig. 2 ist auch hier ganz deutlich zu sehen, daß das Abdeckchip 17 von den Elektroden und den Anschlüssen der Elektroden durch einen Isolator aus Silizium 16 isoliert ist. Dieser ist auch gleichzeitig Bondbereich 7 zum Vakuumdichten beim Verkapseln der Anordnung. Der Aufbau besteht wiederum aus dem Träger aus Silizium 11 mit einer Siliziumdioxidschicht 12. Darauf sind der Feldemitter 1, die Linsen 4, das Gitter 7 und die zweite Anode 8 angeordnet. Die erste Anode ist auch hier wieder die linke Elektrode der elektrostatischen Linse 4. Außerdem ist wieder das Gitter 7 aus Metall angeordnet, aus der die emittierte Terahertz-Strahlung 15 austritt. Der Elektronenstrahl 10 ohne Ablenkung trifft auf die zweite Anode 8 mit elektrischem Anschluß 2. Das eine Membranfenster 14 ist mit einer Linse 19 zur Fokussierung der THz-Strahlung 15 versehen. In beiden Kammern 18, 18' ist durch das besonders geformte Abdeckchip 17 ein Vakuum 13 vorhanden, wobei in der zweiten Kammer 18' eine nichtdargestellte Getterpumpe mit ihrem Material durch einmalige Aktivierung durch Stromdurchgang in Betrieb gesetzt werden kann, um das Gesamtvolumen der beiden Kammern auf den erforderlichen Arbeitsdruck zu bringen.

In einer weiteren nichtdargestellten Variante sind auf dem Chip neben dem Smith-Purcell-Element durch den elektrischen Anschluß aktivierbare Ionengettermaterialien angebracht, die zum Auspumpen der gebondeten und gekapselten Struktur dienen. Die Art der Herstellung mit Hilfe der additiven Nanolithographie auf durch Elektronenstrahl- oder optische Lithographie vorgefertigten Metall-Leiterbahn-Anschlußstrukturen mit integrierten Gitterstrukturen auf isolierendem Substrat, insbesondere Siliziumoxid, mit THz-Reflexionsunterlage im Gitterbereich integriert aufgebaut, ermöglicht ein solches Bauelement, das in jedweder Lage als modular verfügbare THz-Strahlungsquelle einsetz- und anordnungsbar ist.

### Liste der Bezugszeichen

- 1: Feldemitter(spitzen)
- 2: elektrischer Anschluß oder Verbindungen
- 3: regelbare Spannungsquelle
- 4: elektrostatische Linse
- 5: Strahlablenker oder Ablenkplatten
- 6: elektrische Anschlüsse für Strahlablenker
- 7: Gitter aus Metall
- 8: zweite Anode
- 9: Elektronenstrahl
- 10: Elektronenstrahl ohne Ablenkung
- 11: Silizium (Si)
- 12: Siliziumdioxid (SiO₂)
- 13: Vakuum
- 14: Membranfenster aus Silizium
- 15: emittierte Terahertz-Strahlung
- 16: Isolator oder Bondbereich zum vakuumdichten Kapseln der Anordnung
- 17: Abdeckchip
- 18,18': Kammern
- 19: Linse zur Fokussierung der THz-Strahlung

## Patentansprüche

1. Miniaturisierte Terahertz-Strahlungsquelle mit einem als Elektronenquelle dienenden Feldemitter (1), einer elektrostatischen Linse (4) zur Fokussierung des vom Feldemitter (1) ausgesandten Elektronenstrahls (9) wobei die elektrostatische Linse eine erste Anode der Elektronenquelle enthält, einem Strahlablenker (5) und einem in einem definierten Abstand vom Feldemitter (1) angeordneten Metallgitter (7) aus querstehenden Gitterstäben zur Erreichung der Smith-Purcell-Effekts, **dadurch gekennzeichnet, dass** die Elemente der Strahlungsquelle wie Feldemitter (1), elektrostatische Linse (4), Strahlablenker (5), Metallgitter (7) und eine zweite Anode (8) auf einem Halbleiterchip mit Hilfe additiver oder bekannter Nanolithographie-Verfahren integriert angeordnet sind.

2. Miniaturisierte Terahertz-Strahlungsquelle nach Anspruch 1, **dadurch gekennzeichnet, dass** die Elektronenquelle als ein durch additive Nanolithographie aufgebauter Draht aus gut leitfähigem Material mit stabilisierendem Vorschaltwiderstand ausgeführt ist, und dass der Draht in einer geraden oder auch bogenförmigen Ausführung frei über der Oberfläche der Leiterbahnstruktur für die elektrischen Anschlüsse und Verbindungen (2) in den Spitzen der Feldemitter (1) endend angeordnet ist.

3. Miniaturisierte Terahertz-Strahlungsquelle nach den Ansprüchen 1 und 2, **dadurch gekennzeichnet, dass** die Elektronenquelle punktförmig ausgeführt ist und auf ihrer Spitze des Feldemitters (1) ein durch additive Nanoalithographie aufgebrachten Material mit niedriger Austrittsarbeit aufweist, das bei relativ niedrigen Spannungen bereits Elektronen emittiert.

4. Miniaturisierte Terahertz-Strahlungsquelle nach den Ansprüchen 1 bis 3, **dadurch gekennzeichnet, dass** die Elemente durch einen Abdeckchip (17) vakuumdicht gekapselt sind.

5. Miniaturisierte Terahertz-Strahlungsquelle nach einem der vorangehenden Ansprüche, **dadurch gekennzeichnet, dass** der Strahlablenker (5) zur Ablenkung des Elektronenstrahls (9) in horizontaler und vertikaler Richtung sowie das Metallgitter (7) mit unterlegtem Reflektor auf vorgefertigten Metall-Leiterbahnanschlussstrukturen mit integrierten Gitterstrukturen auf einer Schicht aus Siliziumdioxid (12) eines Substrats aus Silizium (11) mit THz-Reflektoirunterlage im Gitterbereich integriert aufgebaut ist und die gesamte Anordnung für die Terahertz-Strahlung (15) transparent vakuumdicht gekapselt ist, und dass die elektrostatische Linse (4) als miniaturisierte Drahtlinse ausgebildet ist und der Strahlablenker (5) durch integrierte Ablenkplatten (5) ausgebildet ist, wodurch eine Terahertz-Strahlung (15) erzeugt werden kann, deren Intensität und Wellenlänge variierbar und selektierbar ist.

6. Miniaturisierte Terahertz-Strahlungsquelle nach einem der vorangehenden Ansprüche, **dadurch gekennzeichnet, dass** zur Beschleunigung der Elektronen hinter dem die Elektronenquelle bildenden Feldemitter (1) ein Beschleunigungsgitter in Form einer freistehenden Elektrode aus zwei Zylinderstäben oder einem stehenden Drahtring angeordnet ist, und dass dem Beschleunigungsgitter nachgeordnete runde, Multipol- oder Zylinderlinsen die elektrostatischen Linse (4) bilden, durch die die beschleunigten Elektronen hindurchtreten, und dass sich ein Elektronenstrahl ohne Ablenkung (10) über das nachfolgende Metallgitter (7) in einem homogenen Abstand zur Oberfläche ausbreitet.

7. Miniaturisierte Terahertz-Strahlungsquelle nach einem der vorangehenden Ansprüche, **dadurch gekennzeichnet, dass** auf die elektrostatische Linse (4) und den Strahlablenker (5) das Metallgitter (7) nachfolgend angeordnet ist, wobei das Metallgitter (7) ca. 1 mm bis 1 cm lang ist und Gitterpe:rioden zwischen 0,5 und 10 µm aufweist, je nach Wellenlänge der auszusendenden Terahertz-Strahlung (15).

8. Miniaturisierte Terahertz-Strahlungsquelle nach einem der vorangehenden Ansprüche, **dadurch gekennzeichnet, dass** mehrere elektrisch getrennte Beugungsgitter als Metallgitter (7) nebeneinander angeordnet sind, die durch Selektion verschiedener Quellen zur Auswahl verschiedener emittierter Wellenlängen aktivierbar sind.

9. Miniatursierte Terahertz-Strahlungsquelle nach einem der vorangehenden Ansprüche, **dadurch gekennzeichnet, dass** auf einem Halbleiterchip neben den Terahertz-Strahlungserzeugenden Elemente - Smith-Purcell-Element - durch eine Elektrode aktivierbare Ionengettermaterialien zum Herstellen und Aufrechterhalten des erforderlichen Vakuums (13) in der gebondeten und gekapselten Struktur angebracht sind.

10. Miniaturisierte Terahertz-Strahlungsquelle nach einem der vorangehenden Ansprüche, **dadurch gekennzeichnet, dass** zum Konstanthalten der Strahlung der durch den Feldemitter (1) gebildeten Elektronenquelle eine regelbare Spannungsquelle (3) über elektrische Anschlüsse oder Verbindungen (2) mit der Elektronenquelle verbunden ist, und dass der die Spitzen der Feldemitter (1) verlassende Elektronenstrahl (9) auf einer als zweiten Anode (8) dienenden Elektrode der Anordnung gesammelt wird.

11. Miniaturisierte Tera-Hertzstrahlungsquelle nach einem der vorangehenden Ansprüche, **dadurch gekennzeichnet, dass** zur Feineinstellung der Wellenlänge bzw. zur Erzeugung eines gewünschten Frequenzspektrums zwischen Erdelektrode der elektrostatischen Linse (4) und der als zweiten Anode (8) wirkenden Elektrode zur Veränderung der Elektronengeschwindigkeit längs des Metallgitters (7) eine Spannung angelegt ist.

12. Miniaturisierte Terahertz-Stahlungsquelle nach einem der vorangehenden Ansprüche, **dadurch gekennzeichnet, dass** die auf einem Halbleiterchip aufgebaute miniaturisierte Terahertz-Strahlungsquelle aus dem Feldemitter (1) bzw. den Spitzen der Feldemitter (1), einer Optik aus einer elektrostatischen Linse (4), einem Metallgitter (7) und einer zweiten Anode (8) durch ein in Silizium-Membrantechnik geätztes Membranfenster (14) abgedeckt ist und in einem Vakuumsystem vor dem Bonden auf einen Druck in einem Bereich von 10⁻⁴ Torr evakuierbar ist, der für eine mittlere freie Weglänge von 1 Millimeter ausreicht, und dass die Kammer(n) (18, 18') im Vakuumsystem durch thermisches Bonden, ohne die Spannungszuführung kurzzuschließen, kapsel- bzw. verschließbar ausgeführt ist bzw. sind.

13. Miniaturisierte Terahertz-Strahlungsquelle nach einem der vorangehenden Ansprüche, **dadurch gekennzeichnet, dass** zwei Membranfenster (14) für zwei Kammern (18, :L8') nebeneinander in dem Abdeckchip (17) angeordnet sind, und dass in einem der beiden Membranfenster (14) eine Getterpumpe durch einmalige Aktivierung mittels Stromdurchgang in Betrieb setzbar ist, mit der das Gesamtvolumen der beiden gebildeten Kammern (18, 18') den erforderlichen Arbeitsdruck erhält.

14. Miniaturisierte Terahertz-Strahlungsquelle nach einem der vorangehenden Ansprüche, **dadurch gekennzeichnet, dass** die Membranfenster (14) im Abdeckchip (17) durch zusätzlich aufgebrachte Schichten reflexionsvermindernd behandelt sind.

15. Miniaturisierte Terahertz-Strahlungsquelle nach einem der vorangehenden Ansprüche, **dadurch gekennzeichnet, dass** unter dem Gitterbereich ein Terahertz-Strahlungsreflektor in Form einer Metallschicht oder in Form einer Anordnung von Gitterstäben mit definiertem Abstand geeigneter Periode aus magnetischen oder unmagnetischen Materialien zur Verstärkung der Intensität der emittierten Terahertz-Strahlung (15) angeordnet ist.

16. Miniaturisierte Terahertz-Strahlungsquelle nach einem der vorangehenden Ansprüche, **dadurch gekennzeichnet, dass** durch die Strahlführung über dem Metallgitter (7) mit definiertem Abstand die Intensität der Strahlungsquelle variierbar ist, und dass durch den Einsatz eines zusätzlichen Ablenkelementes vor dem Metallgitter (7) die abgestrahlte Intensität durch Anlegen einer Wechselspannung an dieses Ablenkelement modulierbar ist.

17. Miniaturisierte Terahertz-Strahlungsquelle nach einem der vorangehenden Ansprüche, **dadurch gekennzeichnet, dass** die Terahertz-Strahlung (15) für spektroskopische Zwecke moduliert erzeugbar ist, und dass dieselbe Lock-In-Modulation auch durch die Modulation der Extraktionsspannung an der Spitze des Feldemitters (1) generierbar ist.

18. Miniaturisierte Terahertz-Strahlungsquelle nach einem der vorangehenden Ansprüche, **dadurch gekennzeichnet, dass** die Quelle um einen auf einer darüberliegenden. Fläche aufgebauten Monochromator in Form einer für diesen Bereich wirksamen Nanometer- bzw. Mikrometerstruktur ergänzt ist, und dass Terahertz-Strahlen (15), die mit unterschiedlicher Wellenlänge erzeugt werden können, die Quelle in unterschiedliche Richtungen verlassen.

19. Miniaturisierte Terahertz-Strahlungsquelle nach einem der vorangehenden Ansprüche, **dadurch gekennzeichnet, dass** zwischen der elektrostatischen Linse (4) zur Fokussierung und dem Ende des Metallgitters (7) ein elektrisches Feld angelegt ist, in dem am Ende des Metallgitters (7) eine zusätzliche Elektrode der zweiten Anode (8) angeordnet ist, die durch die angelegte Spannung die fliegenden Elektronen entweder beschleunigt oder abbremst.

20. Miniaturisierte Terahertz-Strahlungsquelle nach einem der vorangehenden Ansprüche, **dadurch gekennzeichnet, dass** das Metallgitter (7) in Bereiche eingeteilt ist, die parallel zur Strahlrichtung liegen, in denen unterschiedliche Gitterkonstanten realisiert sind, und dass ein laterales Ablenk-Element zur Strahlführung bzw. Wellenlängenselektion um die Gitterbereiche herum aufgebaut ist bzw. Gruppen von Feldemittern (1) selektiv angesteuert werden.

21. Miniaturisierte Terahertz-Strahlungsquelle nach einem der vorangehenden Ansprüche, **dadurch gekennzeichnet, dass** das Metallgitter (7) in seiner Gitterkonstante quer zur Strahlrichtung variiert, sodass Ablenkfelder oder das Metallgitter (7) insgesamt umschließende Ablenkplatten als Strahlablenker (5) angeordnet sind, wodurch die Strahlführung über dem Gitter (7) so veränderbar ist, dass ein Bereich einer anderen Gitterkonstante zur Emission der Wellenlänge der Terahertz-Strahlung (15) ausgewählt wird, und dass insbesondere bei einem Metallgitter (7) mit variabler Gitterkonstante die Wellenlänge in kontinuierlicher Weise einstellbar ist.

22. Miniaturisierte Terahertz-Strahlungsquelle nach einem der vorangehenden Ansprüche, **dadurch gekennzeichnet, dass** für die Intensitätssteuerung unter und über dem Metallgitter (7) eine für die Terahertz-Strahlung (15) transparente elektrostatische Platte angeordnet ist, mit der im gesamten Gitterbereich die Lage des Elektronenstrahls (9) variierbar ist.

23. Miniaturisierte Terahertz-Strahlungsquelle nach einem der vorangehenden Ansprüche, **gekennzeichnet durch** eine Ausbildung als ein in jeder räumlichen Lage modular verfügbares und einsetzbares Bauteil.

## Claims

1. Regarding a miniaturized terahertz radiation source with field emitter (1) serving as an electron source, an electrostatic lens (4) to focus the electron beam (9) transmitted by the field emitter (1), (where the electrostatic lens contains the electron source's first anode), a beam deflector (5) and a metallic grating (7) placed at a defined distance from the field emitter (1) and consisting of diagonally-standing grating rods to facilitate the Smith-Purcell effect, **characterized by** the fact that the radiation source elements such as field emitter (1), electrostatic lens (4), beam deflector (5), metallic grating (7) and a second anode (8) are integrated and subsequently arranged on a semiconductor chip using available additive nanolithographic processes.

2. Regarding a miniaturized terahertz radiation source in accordance with claim 1, **characterized by** the fact that the electron source is effectuated in the form of a wire constructed using additive nanolithography from readily conductive material with stabilising series resistance, and that the wire may be of a straight or curved design, freely arranged over the surface of the conductor path structure for the electric connections and contacts (2) and ending in the field emitter tips (1).

3. Regarding a miniaturized terahertz radiation source in accordance with claims 1 and 2, **characterized by** the fact that the electron source has a punctiform design and on its field emitter tips (1), a material with a low working function is deposited using additive nanolithography, so that electrons already begin to be emitted in response to relatively low voltages.

4. Regarding a miniaturized terahertz radiation source in accordance with claims 1 to 3, **characterized by** the fact that the elements are hermetically encapsulated by a covering chip (17).

5. Regarding a miniaturized terahertz radiation source in accordance with one of the preceding claims, **characterized by** the fact that the beam deflector (5) is integrated in the grating region for the purpose of deflecting the electron beam (9) both horizontally and vertically, and that the metal grating (7) is also integrated in the same, with underlaid reflector on prefabricated metal conductor-connection structures and integrated grating structures on a layer of silicon dioxide (12) linked to a silicon substrate (11) with a THz underlaid reflector, where the entire terahertz radiation (15) arrangement is hermetically encapsulated transparently, and the electrostatic lens (4) is designed as a miniaturized wire lens and the beam deflector (5) is formed with the aid of integrated deflector plates (5), through which terahertz radiation (15) can be generated, whose intensity and wavelength is variable and may be selected.

6. Regarding a miniaturized terahertz radiation source in accordance with one of the preceding claims, **characterized by** the fact that an accelerator grid in the form of a free-standing electrode composed of two cylindrical rods or a standing wire ring is mounted in order to promote the acceleration of the electrons behind the field emitter (1) which forms the electron source, where the electrons may be accelerated and directed into subsequent round multipole lenses and /or cylindrical lenses forming electrostatic lens (4), so that the undeflected electron beam (10) is deflected over the subsequent metallic grating (7) at a homogeneous distance to the surface.

7. Regarding a miniaturized terahertz radiation source in accordance with one of the preceding claims, **characterized by** the fact that a metallic grating (7) is subsequently mounted on the electrostatic lens (4) and the beam deflector (5), where this grating (7) measures approximately 1 mm to 1 cm in length, with grating periods of 0.5 to 10 µm, depending on the wavelength of the terahertz radiation (15) which has to be emitted.

8. Regarding a miniaturized terahertz radiation source in accordance with one of the preceding claims, **characterized by** the fact that a plurality of electrically isolated diffraction gratings are configured side by side as metallic gratings (7), which may be activated through the selection of various sources, enabling the selection of different emitted wavelengths.

9. Regarding a miniaturized terahertz radiation source in accordance with one of the preceding claims, **characterized by** the fact that elements next to the terahertz radiation-generating Smith-Purcell-element on a semiconductor chip are mounted on the bonded and encapsulated structure by means of ionic getter materials which can be activated per electrode in order to produce and maintain the required vacuum (13).

10. Regarding miniaturized terahertz radiation source in accordance with one of the preceding claims, **characterized by** the fact that a regulated voltage source (3) is linked to the electron source via electric connections and contacts (2) in order to maintain the constancy of the beam forming the electron source and transmitted by the field emitter (1), and the electron beam (9) released by the field emitter tips (1) collects on an electrode which serves as a second anode (8).

11. Regarding a miniaturised terahertz radiation source in accordance with one of the preceding claims, **characterized by** the fact that electric tension is applied for purposes of fine-tuning the wavelengths or to generate a desired frequency spectrum between the electrostatic lens' (4) earth electrode and the electrode functioning as second anode (8) in order to alter the electron speed along the metallic grating (7).

12. Regarding a miniaturized terahertz radiation source in accordance with one of the preceding claims, **characterized by** the fact that the miniaturized terahertz radiation source constructed on a semiconductor chip and transmitted from the field emitter (1) or the field emitter tips (1), an electrostatic lens optic (4), a metallic grating (7) and a second anode (8) is covered by a membrane window (14) corroded using a silicone membrane technique, and the subsequently constructed radiation emitter may be evacuated in a vacuum system, prior to the bonding, to a pressure of 10⁻⁴, which suffices for a one millimetre average path length, where the hollow chamber(s) (18, 18')may subsequently be sealed in the vacuum by thermal bonding, without short-circuiting the voltage supply.

13. Regarding a miniaturized terahertz radiation source in accordance with one of the preceding claims, **characterized by** the fact that two membrane windows (14) for two chambers (18, 18') are arranged side by side in covering chip (17), and that in one of the two membrane windows (14), a getter pump may be put into operation through a single activation by means of voltage transit, through which the total volume of the two chambers (18, 18') attains the required operating pressure.

14. Regarding a miniaturized terahertz radiation source in accordance with one of the preceding claims, **characterized by** the fact that the membrane windows (14) in the covering chip (17) are treated with special layers to reduce reflectivity.

15. Regarding a miniaturized terahertz radiation source in accordance with one of the preceding claims, **characterized by** the fact that a terahertz radiation reflector in the form of a metallic layer or in the form of an arrangement of suitably distanced grating rods constructed from magnetised or unmagnetised materials to increase the intensity of the emitted terahertz radiation (15) is mounted beneath the grating region.

16. Regarding a miniaturized terahertz radiation source in accordance with one of the preceding claims, **characterized by** the fact that the intensity of the radiation source is variable as a result of the beam direction via the distanced metallic grating (7), and that through the use of an additional deflective element in front of the metallic grating (7), the emitted intensity can be modulated through the application of an alternating voltage to this deflective element.

17. Regarding a miniaturized terahertz radiation source in accordance with one of the preceding claims, **characterized by** the fact that the terahertz radiation (15) can be generated in a modular fashion for spectroscopic purposes, and that the same lock-in modulation can also be generated through modulating the extraction voltage on the field emitter tips (1).

18. Regarding a miniaturized terahertz radiation source in accordance with one of the preceding claims, **characterized by** the fact that the source has been supplemented by installing a monochromator in the form of a nanometer structure or micrometer structure acting on this region, and that terahertz beams (15) generated with different wavelengths exit the radiation source in different directions.

19. Regarding a miniaturized terahertz radiation source in accordance with one of the preceding claims, **characterized by** the fact that an electric field is generated between the electrostatic lens (4) for focussing purposes, and the end of the metallic grating (7), containing an additional electrode belonging to the second anode (8), which either accelerates or decelerates as a result of the electric tension generated by the flying electrons.

20. Regarding a miniaturized terahertz radiation source in accordance with one of the preceding claims, **characterized by** the fact that the metal grating (7) is placed in regions lying parallel to the beam direction, in which differing grating constants must be realised, so that beam guidance or wavelength selection may be varied over the grating by a lateral deflection element which builds up around the grating area, or by groups of field emitters (1) which are selectively steered towards it.

21. Regarding a miniaturized terahertz radiation source in accordance with one of the preceding claims, **characterized by** the fact that the metal grating (7) may vary transversely to the beam direction in terms of its grating constant, with the result that deflection fields or the entire metal grating (7) is arranged using surrounding deflection plates as beam deflectors (5), as a result of which the beam direction over the grating (7) is so changeable that an area with a different grating constant may be selected to emit the terahertz radiation (15) wavelength, and the wavelength is continually adjustable in the case of a metal grating (7) with variable grating constant.

22. Regarding a miniaturized terahertz radiation source in accordance with one of the preceding claims, **characterized by** the fact that the intensity of the electrostatic radiation source is controlled by installing an electrostatic plate, transparent to THz radiation (15), below and above the metallic grating (7), thereby enabling the position of the electron beam (9) to be varied through the entire grating region.

23. Regarding a miniaturized terahertz radiation source in accordance with one of the preceding claims, **characterized by** the designing of a modular component which can be placed in any particular location.

## Revendications

1. Source de rayonnement terahertz miniaturisée avec un émetteur de champ (1) servant de source d'électrons, une lentille électrostatique (4) pour la focalisation du faisceau électronique (9) envoyé par l'émetteur de champ (1), la lentille électrostatique contenant une première anode de la source d'électrons, un déflecteur de faisceau (5) et une grille métallique (7) constituée de barres transversales pour obtenir l'effet Smith-Purcellet et agencée à une distance définie de l'émetteur de champ (1), **caractérisée par le fait que** les éléments de la source de rayonnement tels qu'émetteur de champ (1), lentille électrostatique (4), déflecteur de faisceau (5), grille métallique (7) et une deuxième anode (8) sont agencés et intégrés sur un chip semi-conducteur à l'aide de procédés de nanolithographie additifs ou connus.

2. Source de rayonnement terahertz miniaturisée selon la revendication 1, **caractérisée par le fait que** la source d'électrons est un fil réalisé dans une matière bien conductrice et monté par nanolithographie additive, avec une résistance stabilisante en amont, et que le fil exécuté droit ou arqué est agencé librement au-dessus de la surface de la structure à piste conductive pour les connexions et les liaisons électriques (2) et se termine dans les pointes de l'émetteur de champ (1).

3. Source de rayonnement terahertz miniaturisée selon les revendications 1 et 2, **caractérisée par le fait que** la source d'électrons a la forme d'un point et présente à la pointe de l'émetteur de champ (1) un matériau appliqué par nanolithographie additive, qui a un faible travail de sortie et émet déjà des électrons à des tensions relativement basses.

4. Source de rayonnement terahertz miniaturisée selon les revendications 1 à 3, **caractérisée par le fait que** les éléments sont encapsulés par un chip de recouvrement (17) et étanches au vide.

5. Source de rayonnement terahertz miniaturisée selon une des revendications précédentes, **caractérisée par le fait que** le déflecteur de faisceau (5) destiné à dévier le faisceau électronique (9) dans le sens horizontal et vertical ainsi que la grille métallique (7) sous laquelle se trouve un réflecteur sont intégrés sur des structures de connexion à piste conductive métalliques préfabriquées, présentant des structures réticulaires intégrées sur une couche de dioxyde de silicium (12) d'un substrat en silicium (11) avec support de réflecteur tHz dans la zone de la grille, et que tout l'agencement pour le rayonnement terahertz (15) est encapsulé de manière à être transparent et étanche au vide, que la lentille électrostatique (4) est une lentille filiforme miniaturisée et que le déflecteur de faisceau (5) est constitué de plaques de déviation intégrées (5) de sorte qu'un rayonnement terahertz (15) dont l'intensité et la longueur d'onde sont variables et sélectionnables peut être engendré.

6. Source de rayonnement terahertz miniaturisée selon une des revendications précédentes, **caractérisée par le fait que** pour accélérer les électrons, une grille d'accélération ayant la forme d'une électrode isolée constituée de deux barres cylindriques ou d'un anneau en fil fixe est agencée derrière l'émetteur de champ (1) qui constitue la source d'électrons, que des lentilles rondes, multipolaires ou cylindriques disposées après la grille d'accélération constituent la lentille électrostatique (4) que traversent les électrons accélérés, et. qu'un faisceau électronique non dévié (10) se propage au-dessus de la grille métallique qui suit (7), à une distance homogène de la surface.

7. Source de rayonnement terahertz miniaturisée selon une des revendications précédentes, **caractérisée par le fait que** la grille métallique (7) est agencée à la suite de la lentille électrostatique (4) et du déflecteur de faisceau (5), la grille métallique (7) ayant environ 1 mm à 1 cm de longueur et présentant des périodes allant de 0,5 et 10 µm en fonction de la longueur d'onde du rayonnement terahertz (15) à émettre.

8. Source de rayonnement terahertz miniaturisée selon une des revendications précédentes, **caractérisée par le fait que** plusieurs réseaux de diffraction séparés électriquement sont agencés les uns à côté des autres comme grille métallique (7) et peuvent être activés par sélection de différentes sources pour le choix de différentes longueurs d'onde émises.

9. Source de rayonnement terahertz miniaturisée selon une des revendications précédentes, **caractérisée par le fait que** sur un chip semi-conducteur, à côté des éléments engendrant le rayonnement terahertz - élément de Smith-Purcell - sont appliqués des matériaux ioniques à sorbeur activables par une électrode pour créer et maintenir le vide requis (13) dans la structure liée et encapsulée.

10. Source de rayonnement terahertz miniaturisée selon une des revendications précédentes, **caractérisée par le fait que** pour maintenir constant le rayonnement de la source d'électrons formée par l'émetteur de champ (1), une source de tension réglable (3) est reliée à la source d'électrons par des connexions ou des liaisons électriques (2), et que le faisceau électronique (9) qui quitte les pointes de l'émetteur de champ (1) est recueilli sur une électrode de l'agencement servant de deuxième anode (8).

11. Source de rayonnement terahertz miniaturisée selon une des revendications précédentes, **caractérisée par le fait que** pour le réglage précis de la longueur d'onde, respectivement la génération d'un spectre de fréquences désiré entre l'électrode de la lentille électrostatique (4) et l'électrode agissant comme deuxième anode (8), une tension est appliquée le long de la grille métallique (7) pour modifier la vitesse des électrons.

12. Source de rayonnement terahertz miniaturisée selon une des revendications précédentes, **caractérisée par le fait que** la source de rayonnement terahertz miniaturisée montée sur un chip semi-conducteur et comprenant l'émetteur de champ (1), ou les pointes de l'émetteur de champ (1), un dispositif optique constitué d'une lentille électrostatique (4), une grille métallique (7) et une deuxième anode (8) est recouverte d'une fenêtre à membrane gravée selon la technique des membranes de silicium et peut être, avant la liaison, mise dans un système de vide à une pression située dans la plage de 10⁻⁴ torrs et suffisante pour une longueur de course libre moyenne de 1 millimètre, et que la/les cellule(s) (18, 18') dans le système de vide est ou sont exécutée(s) de manière à pouvoir être encapsulées ou fermées par liaison thermique, sans court-circuiter l'alimentation en tension.

13. Source de rayonnement terahertz miniaturisée selon une des revendications précédentes, **caractérisée par le fait que** deux fenêtres à membrane (14) pour deux cellules (18, 18') sont agencées l'une à côté de l'autre sur le chip de recouvrement (17), et que dans l'une des deux fenêtres à membrane (14) une pompe à sorbeur, par laquelle le volume total des deux cellules constituées (18, 18') reçoit la pression de travail nécessaire, peut être mise en service par une seule activation au moyen du passage de courant.

14. Source de rayonnement terahertz miniaturisée selon une des revendications précédentes, **caractérisée par le fait que** les fenêtres à membrane (14) dans le chip de recouvrement (17) sont traitées à l'aide de couches appliquées en plus pour diminuer la réflexion.

15. Source de rayonnement terahertz miniaturisée selon une des revendications précédentes, **caractérisée par le fait qu'**un réflecteur du rayonnement terahertz ayant la forme d'une couche métallique ou la forme d'un agencement de barres en grille avec un espacement défini de période adéquate réalisés dans des matériaux magnétiques ou non magnétiques est agencé sous la zone de la grille pour renforcer l'intensité du rayonnement terahertz émis (15).

16. Source de rayonnement terahertz miniaturisée selon une des revendications précédentes, **caractérisée par le fait que** l'intensité de la source de rayonnement peut être variée par la focalisation du faisceau au-dessus de la grille métallique (7) à espacement défini, et que l'utilisation d'un élément de déviation supplémentaire avant la grille métallique (7) permet de moduler l'intensité émise par l'application d'une tension alternative sur cet élément de déviation.

17. Source de rayonnement terahertz miniaturisée selon une des revendications précédentes, **caractérisée par le fait que** le rayonnement terahertz (15) peut être engendré et modulé à des fins spectroscopiques et que la même modulation lock-in peut aussi être générée par la modulation de la tension d'extraction à la pointe de l'émetteur de champ (1).

18. Source de rayonnement terahertz miniaturisée selon une des revendications précédentes, **caractérisée par le fait que** la source est complétée par un monochromateur monté sur une surface susjacente et ayant la forme d'une structure micrométrique ou nanométrique efficace pour cette plage, et que les rayons terahertz (15), qui peuvent être engendrés avec différentes longueurs d'onde, quittent la source dans des directions différentes.

19. Source de rayonnement terahertz miniaturisée selon une des revendications précédentes, **caractérisée par le fait qu'**entre la lentille électrostatique (4) destinée à focaliser et l'extrémité de la grille métallique (7) est appliqué un champ électrique dans lequel une électrode supplémentaire de la deuxième anode (8) est agencée à l'extrémité de la grille métallique (7) et accélère ou freine les électrons volants du fait de la tension appliquée.

20. Source de rayonnement terahertz miniaturisée selon une des revendications précédentes, **caractérisée par le fait que** la grille métallique (7) est divisée en sections orientées parallèlement au sens du faisceau et dans lesquelles des constantes de grille différentes sont réalisées, et qu'un élément de déviation latéral est monté autour des sections de grille pour la focalisation du faisceau et/ou la sélection de la longueur d'onde, respectivement que des groupes d'émetteurs de champ (1) sont activés de manière sélective.

21. Source de rayonnement terahertz miniaturisée selon une des revendications précédentes, **caractérisée par le fait que** la grille métallique (7) varie dans sa constante perpendiculairement au sens du faisceau, de sorte que des champs de déflexion ou des plaques de déviation entourant en totalité la grille métallique (7) sont agencés comme déflecteur du faisceau (5), si bien que la focalisation du faisceau au-dessus de la grille (7) peut être modifiée de telle manière qu'une section d'une autre constante de grille est sélectionnée pour l'émission de la longueur d'onde du rayonnement terahertz (15), et que la longueur d'onde peut être réglée de manière continue, en particulier dans le cas d'une grille métallique (7) à constante variable.

22. Source de rayonnement terahertz miniaturisée selon une des revendications précédentes, **caractérisée par le fait que** pour la commande de l'intensité en dessous et au-dessus de la grille métallique (7) est agencée une plaque électrostatique transparente pour le rayonnement terahertz (15), avec laquelle la longueur du faisceau électronique (9) peut être variée dans toute la zone de la grille.

23. Source de rayonnement terahertz miniaturisée selon une des revendications précédentes, **caractérisée par** une constitution en tant que composant disponible et utilisable de façon modulaire dans toute position dans l'espace.
